(19) Europäisches Patentamt
European Patent Office
Office européen des brevets

(11) **EP 4 651 091 A1**

(12) **EUROPEAN PATENT APPLICATION**

(43) Date of publication:
**19.11.2025 Bulletin 2025/47**

(21) Application number: **25176917.0**

(22) Date of filing: **16.05.2025**

(51) International Patent Classification (IPC):
*G06T 17/00* (2006.01)    *G06T 15/30* (2011.01)

(52) Cooperative Patent Classification (CPC):
**G06T 15/30; G06T 17/00;** G06T 2210/56

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **17.05.2024 GB 202407015**

(71) Applicant: **Sony Interactive Entertainment Inc.**
**Tokyo 108-0075 (JP)**

(72) Inventors:
• **BIGOS, Andrew**
**London, W1F 7LP (GB)**
• **RUDKO, Pavel**
**London, W1F 7LP (GB)**
• **DIXON, Alex**
**London, W1F 7LP (GB)**

(74) Representative: **Gill Jennings & Every LLP**
**The Broadgate Tower**
**20 Primrose Street**
**London EC2A 2ES (GB)**

(54) **RENDERING AN IMAGE OF A POINT CLOUD**

(57)    There is provided a computer-implemented method of rendering an image using a point cloud, the method comprising: receiving a plurality of points in the point cloud, each point comprising an extent defined by a three-dimensional extent function, centred on a centre point; determining a clipping surface for a point within the point cloud, wherein the clipping surface defines a boundary of the extent; and rendering the image by rendering a portion of the extent of each point within the boundary defined by its respective clipping surface.

**(S100)** Receive a point cloud comprising a plurality of points, each point comprising an extent

↓

**(S102)** Determine a clipping surface for one or more points in the point cloud

↓

**(S104)** Render the extent of each point with the boundary of the rendered region defined by the clipping surface of the point

FIG. 8

EP 4 651 091 A1

**Description**

**FIELD OF THE INVENTION**

The present invention relates to methods and systems for rendering an image. More specifically, the present invention relates to methods and systems for rendering an image on a computer in the context of a video game.

**BACKGROUND**

The use of meshes to represent three-dimensional (3D) models and scenes has been commonplace in computer graphics since the birth of the field, due to their conceptual simplicity and ease of rasterization. However, other representations, such as 3D "splatting" rendering techniques, have recently come to the fore. Such representations are known as "radiance fields" - 3D functions (fields) that evaluate to a colour and brightness (a radiance) of a particular point in a 3D scene.

3D Gaussian splatting (3DGS) is a radiance field-based rendering technique in which a scene is represented by the summation of many 3D Gaussian functions, distributed throughout 3D space. These individual functions are commonly known as "points", forming a "point cloud". Summing up the colour of each individual point and the level of opacity defined by its respective Gaussian function results in an image that can be displayed to the user. The placement of individual Gaussian "splats" can be done by a designer or developer, or can be generated by a machine learning process based on some input image, scene, mesh or concept.

However, as the splats have a shape defined by a 3D Gaussian function, they have particular geometric characteristics. More specifically, they cannot represent a discontinuous or sharp edge. This means that large numbers of Gaussians are required to approximate an edge or sharp change in the image, requiring large amounts of computational power and memory.

There is therefore a need for a method of rendering a point cloud that is capable of representing such features efficiently.

**SUMMARY OF INVENTION**

According to a first aspect, there is provided a computer-implemented method of rendering an image using a point cloud, the method comprising: receiving a plurality of points in the point cloud, each point comprising an extent defined by a three-dimensional extent function, centred on a centre point; determining a clipping surface for a point within the point cloud, wherein the clipping surface defines a boundary of the extent; and rendering the image by rendering a portion of the extent of each point within the boundary defined by its respective clipping surface.

In contrast to methods known in the art, the provision of a clipping surface for a point in the point cloud permits the rendering of a sharp edge. The clipping surface, which in some examples may be a plane, may intersect the extent function and define a region of the extent to render. If the clipping surface does not meaningfully intersect the extent, i.e. if the extent function is zero at all points it touches the clipping surface, the rendering is unaffected.

For example, the clipping surface may bisect the extent of the point into two halves, and select only a single one of these halves for rendering. In this way, there will be a sharp edge rendered along where the clipping surface lies. In some examples, the clipping surface itself may be rendered, which may be as an aid to debugging or visually locating the clipping surface, but in general, the clipping surface itself will not be rendered.

A clipping surface may be provided for each point in the point cloud, or only some of the points in the point cloud.

In general, the extent of the points in the point cloud can be defined by any 3D function, for instance, an exponential function, a polynomial function, or a logarithmic function. However, in some examples, the extent of the points will comprise a 3D Gaussian function. In some examples, different types of function may be used for different points, in order to generate varied visual effects, but in most examples the same type of function will be used for every point.

In typical examples, the value of the extent for a first point at a particular point in space, or the "rendering extent", defines the visibility of the first point at the particular point in space. Typically, it defines the shape of the point. Further, it typically defines the region over which the colour of the point is rendered.

The Gaussian function, often referred to simply as a Gaussian, is a mathematical function of the form

$$f(x) = \exp(-x^2),$$

where exp represents the exponential function. Such a Gaussian may be parametrised with various (real) constants in one dimension, giving the form

$$f(x) = a \exp(-(x - b)^2/c)$$

where a and b are arbitrary real constants, and c is an arbitrary non-zero real constant. The Gaussian may be extended into three dimensions with a parametrisation

$$f(x) = a \exp\left(-\frac{1}{2} x^T \Sigma^{-1} x\right)$$

where a is an arbitrary real constant, $x$ is a 3D vector, $x^T$ is the transposition of $x$, and $\Sigma^{-1}$ is the inverse of a positive-definite $3 \times 3$ matrix.

The use of 3D Gaussians to define the extent of the points of the point cloud has several advantages. The Gaussian is a function with a well known and easily calculable derivative, which allows for efficient optimization of the point cloud to a desired input image. Further, Gaussians can be easily projected to the 2D plane, allowing for efficient rasterization and rendering of the final image.

Each of the points in the point cloud may further comprise colour data defining colour over the extent. The colour may be a uniform value for the whole extent of the point, such as specified by RGB values, HSV values or similar. These values may be encoded as floating point, rational or integer values. The colour may further comprise an alpha channel, being encoded by RGBA values, HSVA values or similar, allowing for transparent or semi-transparent colours.

In preferable examples, the colour is not uniform over the extent of the point. The colour may be defined by a function, such as a 1D function, 2D function or 3D function, such as a 3D function of position. This allows for the use of points with larger extents to create an equivalent image.

The use of a colour function that maps to the surface of an ellipsoid like a Gaussian simplifies the implementation and allows for colours to be defined with respect to the viewing angle of the point. Therefore, in some examples, the colour data comprises a spherical harmonic, and may be defined as a sum of spherical harmonics with varying coefficients. The coefficients may be 3D or 4D colour vectors, such as RGB or RGBA representations.

In many cases, using a clipping surface that can represent a straight line results in being able to use fewer points for a rendering that is visually indistinguishable. Therefore, optionally, the clipping surface is defined by one or more planes, wherein a plane is a surface in 3D space. A plane in 3D space may be defined by a 3D point and a 3D normal vector. Provision of multiple planes per point allows for more complex geometry to be represented by a single point in the point cloud, for example, two sharp edges at an angle. This reduces the computational demands of rendering the scene further, as fewer points are required.

Alternatively or in addition, the clipping surface may be defined by the surface of a 3D volume. The 3D volume may provide a bounds for rendering the extent of the point, i.e. only the portion of the extent contained within the 3D volume is rendered. Using a 3D volume to define the clipping surface may allow greater flexibility and therefore allow a more complex rendering from fewer points. Additionally, in some examples, the 3D volume may be calculated corresponding to an input mesh or input polygon representing part of the scene.

The use of a 3D volume as the clipping surface has several advantages - it can represent arbitrary geometry, provide a plurality of sharp edges, and constrain the extent of a point in ways not possible using a continuous, differentiable function. However, specifying the location of the edges of the 3D volume can be challenging. Therefore, in some examples the determining the clipping surface further comprises: receiving an interpolation factor; determining an interpolated volume, determined by interpolation between the extent of the point and a three-dimensional volume, as parametrised by the interpolation factor; wherein the clipping surface is defined by a surface of the interpolated volume.

In this way, a middle volume between the surface defined by the extent of the point, for instance the 3D surface found when the extent function equals 0.5, and an arbitrary 3D polygon, for instance, the unit cube, can be found. This allows the designer to blend between a harsh geometric clipping and the original shape of the extent function.

A benefit of the methods described herein is the accurate rendering of a desired scene using fewer points than methods of rendering point clouds known in the art. Therefore, the method may further comprise combining a plurality of first points within the point cloud into a combined point, to provide a combined extent; and determining a clipping surface for the combined point. In some examples, the combination of points comprises the removal of some number of first points and the modification of the extent of a second point. In other examples, the combination of points comprises the removal of some number of first points and the creation of a new second point to serve as the combined point. Points may be selected for combination randomly, based on their locations, or based on some other property of the points themselves or of the rendered image. For instance, all points of a certain size within a certain distance of each other may be selected for combination.

In some examples, the clipping surface for the combined point is calculated as a function of the clipping surfaces of the first points which were combined. In other examples, the clipping surface of the combined point is calculated independently, in a process which may be the same as for the other points in the point cloud.

In methods of rendering point clouds known in the art, edges in the rendered image are often created by large quantities of small points along the edge. This is because the inherent lack of sharp edges in the extent of the individual points requires them to be very small in order to produce a sharp edge in the image. Accordingly, in some examples, the first points for combination are determined by determining a plurality of points arranged so as to form an edge.

In some examples, the edge may be detected using classical edge detection algorithms, such as a Canny algorithm, a Sigma filter, or other classical methods. These algorithms may be applied either to an input ground truth image, or to the output rendered image produced by rendering the point cloud. Once the edge is detected, the location of the edge in the image can be mapped onto the location of original points in the point cloud.

In other examples, the edge may be detected by a property of the points in the point cloud. This may be by detecting points of a similar size, detecting points that lie along a line or curve in the 3D space, or by another property, such as similar colours. Many such properties of the points may be used to determine if an edge is present.

Alternatively or in addition, the edge may be detected based upon the clustering of the points in space, i.e. their distance relative to each other being substantially lesser than the average distance to the nearest point in the point cloud. This clustering may signify that the points can be efficiently replaced with a single point. In some examples, the colour of the points will also be a factor in the determination of the edge and/or the combination of the points into a single point.

When replacing points in the point cloud, it is important that the final result of the rendering process, *i.e.* the image produced, is not affected adversely by the attempt to increase efficiency. Accordingly, in some examples, the first points are determined by calculating a second point and a second clipping corresponding to the second point that produce an equivalent rendering to the first points.

In some examples, the second point and second clipping are calculated for first points chosen randomly. However, in preferred examples, candidate points for replacement are first selected based on some criteria, for example, the criteria discussed above of edge detection or clustering. A second point and second clipping surface can then be determined based on optimising the effect on the rendered image of the second point and second clipping surface to most closely match the first points and first clipping surfaces. In this way, the rendered image can be produced more efficiently without degraded quality.

One benefit of the methods described herein is the accurate rendering of a desired scene. Accordingly, the determination of the clipping surface optionally comprises receiving a ground truth image; and optimising the clipping surface with respect to the ground truth image by minimising a difference between the image and the ground truth image. This optimisation may be performed using a classical algorithm, for instance Monte-Carlo minimization, but in preferred examples will be performed using a machine learning model.

The optimisation comprises finding the clipping surface which results in a rendering closest to the ground truth image. The optimisation may be performed using a machine learning model trained to output clipping surfaces for points in a point cloud, trained on a set of input images and corresponding points and clipping surfaces. Accordingly, the optimisation may comprise adjusting the clipping surface of a point to minimise a difference between the image and the ground truth image.

Alternatively, or in addition, the optimisation may further comprise adjusting the extent of a point by modifying the shape of the extent function of the point to minimise a difference between the image and the ground truth image. This may involve modifying the elliptical extent of a point to no longer be elliptical, for instance, replacing a Gaussian extent function with a different function. The modified extent function may have a prismatic, polyhedral or exponential shape. In so doing, the modified extent function may better minimise the difference between the rendered image and the ground truth image.

Further, it may be beneficial to optimise a point cloud that already is configured to render an image. This may comprise removal of unnecessary points in the point cloud, or replicating the effect of several classical points with a single point with a clipping plane. Therefore, the method may further comprise receiving an original point cloud, wherein the ground truth image comprises an image formed by rendering the original point cloud.

In order to increase the performance of the point cloud, it may be beneficial to attempt to optimise the number of points in the cloud against the accuracy of the rendered image. Therefore, the method may further comprise minimising the number of points in the point cloud, such that the machine learning model is trained to minimise the number of points in the point cloud whilst still minimising the difference between the ground truth image and an image formed by rendering the point cloud.

Further, the extent function may be modified to include a discontinuous hard edge, and the clipping surface is defined by the location of the hard edge. The location of the desired hard edge may be encoded in the extent function chosen, for instance, by multiplying a Gaussian with a step function. In this way, the clipping surface may be defined by the location of the step in the step function.

In the case where there are multiple points which may be replaced by a single larger point with a hard edge, the method may further comprise replacing one or more first points with a combined point, wherein the extent function of the combined point comprises a discontinuous hard edge, and the clipping surface of the combined point is defined by the location of the hard edge, to minimise a difference between the image and the ground truth image. This has the advantage of including the definition of the discontinuity in the extent function, whilst also allowing the replacement of multiple points by a single, larger one, improving performance.

Similarly, it is common for point clouds in the art to comprise only points with extents defined by Gaussian functions. In some cases, a better or more efficient match to the original ground truth image could be made by using points with non-elliptical or non-Gaussian extents. Accordingly, the point cloud may comprise a plurality of first points comprising elliptical extents; and the optimization may comprise replacing one or more of the first points with a second point, the second point comprising a polyhedral extent, to minimise a difference between the image and the ground truth image. A polyhedral extent may be an extent defined by a function with the shape or symmetry of a polyhedron, for instance, a cuboid.

When moving from a classical point cloud without clipping planes to a point cloud where some or all of the points comprise clipping planes, a large number of additional degrees of freedom are introduced. This may result in an optimiser getting stuck in local minima of the parameter space. Accordingly, the method may further comprise adding clipping planes to the points progressively, in multiple passes. This may comprises adding a clipping plane to a single point and optimising, then adding a clipping plane to a second point, then optimising, etc. Alternatively, it may comprise adding clipping planes to batches of points, such as five, ten, or fifty points at a time, before iterating the optimisation process. This may also improve the speed of optimisation.

Alternatively or in addition, the optimisation speed may be improved by considering only the points likely to be contributing to an edge in the resultant image, and therefore the points which are most likely to benefit from the inclusion of a clipping plane. Therefore, the method may further comprise identifying an edge in the ground truth image; determining a three-dimensional bounding box corresponding to the edge; and wherein the optimization comprises adjusting and/or replacing only the points contained within the bounding box.

One benefit of the methods described herein is the accurate rendering of a desired scene. Accordingly, this optimisation to a ground truth image may be performed using a classical algorithm, for instance Monte-Carlo minimization, but in preferred examples will be performed using a machine learning model. Therefore, the method may further comprise inputting the ground truth image and the point cloud into a trained machine learning model, wherein the machine learning model is trained to minimise a difference between the image and the ground truth image.

The ground truth image may comprise a 3D mesh, or a 3D model. Indeed, the ground truth image may comprise any arbitrary representation of a 2D or 3D scene, such as a scene file, a collection of associated meshes and textures, or the rendered result thereof.

The optimisation comprises finding the clipping surface which results in a rendering closest to the ground truth image. The optimisation may be performed using a machine learning model trained to output clipping surfaces for points in a point cloud, trained on a set of input images and corresponding points and clipping surfaces.

Similarly, whilst determination of the first points for replacement by a single combined point can be done algorithmically, for instance, with edge detection as discussed above, there are some cases where the provision of a special purpose algorithm fails to detect points which could be replaced. Therefore, in some examples, the method further comprises training a machine learning model to determine the first points based on an input ground truth image. Such a machine learning model may be trained on training data comprising ground truth images, point clouds configured to, when rendered, produce an image close to the ground truth image, and possible combinations of points in the point clouds which can be replaced. The use of a machine learning model may provide a general method of replacing groups of replaceable points that do not lie along a simple edge.

In order to improve the detection of points which could benefit from inclusion of a clipping plane, the method may further comprise, before the step of optimising the clipping surface, expanding the extent of one or more points. This may be done by modifying the extent function in order to increase its value further away from the centre of the point. This has the effect of increasing the amount of overlap between points, as well as forcing clustered points to extend beyond the edge. In this way, such points may be easier to detect and replace.

In line with the optimisation techniques discussed above, it may be beneficial to determine the clipping surfaces of the point cloud when generating the point cloud itself, in order to improve computational efficiency. Therefore, according to a second aspect, there is provided a method comprising: receiving a ground truth image; inputting the ground truth image into a trained machine learning model, wherein the trained machine learning model is trained to: generate a plurality of points to form the point cloud, each point comprising an extent defined by a three-dimensional extent function, centred on a centre point, by minimising a difference between an image formed by rendering the point cloud and the ground truth image; and determine a clipping surface for a point within the point cloud, wherein the clipping surface defines a boundary for rendering of the extent, in order to minimise a difference between an image formed by rendering the point cloud and the ground truth image.

It should be understood that any compatible features of the first aspect as discussed above may be equally applied to the second aspect.

**BRIEF DESCRIPTION OF DRAWINGS**

An example method is described in detail herein with reference to the accompanying figures, in which:

Figure 1 shows a schematic of a point in a point cloud as is known in the art;
Figures 2 to 4 show schematics of a point in a point cloud corresponding to a method described herein;
Figures 5 to 7 show schematics of number of points being combined into a point corresponding to methods described herein; and
Figures 8 to 9 show schematic diagrams of the steps of example methods disclosed herein.

**DETAILED DESCRIPTION**

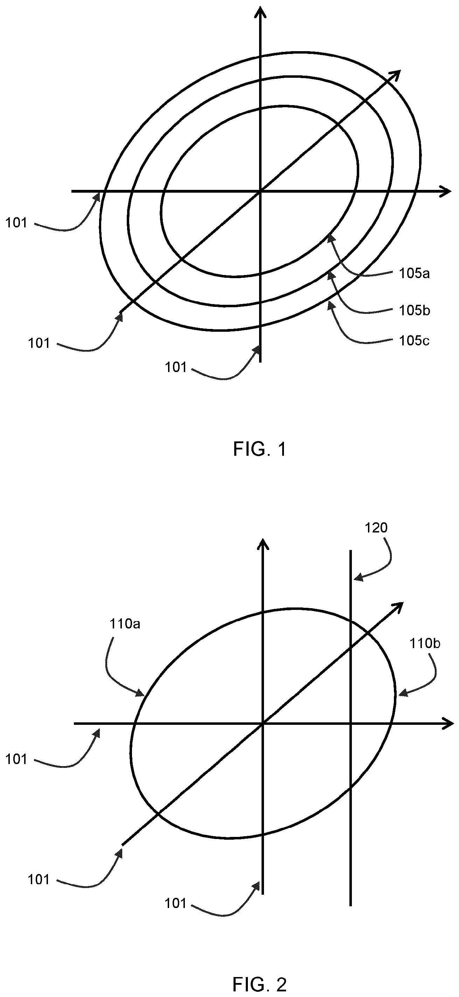

An example schematic of a point, known in the art, which may form part of a point cloud for rendering an image is generally illustrated in Figure 1. Axes 101 are shown to indicate the three dimensions with respect to which the point is defined. The point shown has a visible extent defined by a 3D Gaussian function. The value of the Gaussian function is greater towards the origin of the axes, and lesser further away from the center. This is illustrated by the three concentric shapes 105a-c, showing the shape formed by plotting a surface where the extent function equals 0.25, 0.5, and 0.75 respectively.

When used to render an image, the value of the extent function is used as a modifier to the opacity of the point - the higher the value, the more opaque the point. In this case, the opacity is taken directly as the value of the extent function, which is defined to fall between 0 (fully transparent) and 1 (fully opaque).

The point has a colour defined by a sum of spherical harmonics, defining the visible colour over the extent, which is multiplied by the value of the extent function to result in an opaque colour at the centre and a transparent colour further from the centre.

This point has no hard edges and no ability to represent a hard edge, as it is defined solely by a 3D Gaussian function. A 3D Gaussian tails off towards zero further from the centre, *i.e.* is less opaque further from the centre, but must taper off smoothly and never becomes completely transparent. Therefore, in order to render a hard edge, *i.e.* a sharp, discontinuous change in colour, in an image, large numbers of small 3D Gaussians are clustered together, such that they combine to form an approximation of a hard edge.

An example schematic of a point in a point cloud, in accordance with the claimed invention, for rendering an image is shown in Figure 2. Axes 101 are shown to indicate the three dimensions with respect to which the point is defined. In this example, the point shown has a visible extent defined by a 3D Gaussian function. The outline of a surface 110a, 110b where the extent function equals 0.5 is shown. The point comprises a clipping surface, in this example a clipping plane 120. The clipping plane segments the extent of the point into a region to be rendered, and a region not to be rendered.

In other examples, there may be more than one region to be rendered and more than one region to not be rendered, which may be due to the use of a more complex clipping surface. In other examples, the clipping surface may be defined by the surface of a 3D polygon, or may be defined by an isosurface of a 3D function, or by an arbitrary 2D surface in a 3D space.

The first region 110a is selected for rendering. The second region 110b is selected to not be rendered, as it is on the other side of the clipping surface to the first region. In this way, when the point is rendered as part of rendering the point cloud, there will be a hard edge along the clipping surface 120, which is not possible using the point of the previous example.

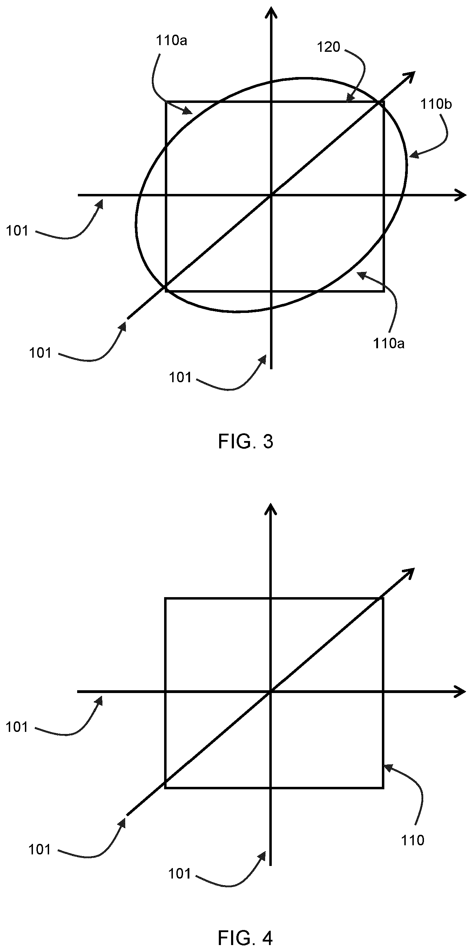

An example schematic of a point in a point cloud, in accordance with the claimed invention, for rendering an image is shown in Figure 3. In this example, the clipping surface 120 is not a clipping plane, but is instead defined as the surface of a 3D polyhedron. In this case, the clipping surface is the surface of a 3D cube. For the sake of simplicity, the clipping surface is rendered in the figure as a 2D representation of the 3D cube. In other examples, the clipping surface may be defined by the surface of any regular or irregular polyhedron.

In this example, some portions 110a of the extent are rendered, as they fall inside the clipping surface 120. Other portions 110b of the extent that are not rendered, as they lie outside of the clipping surface.

The more complex clipping surface of this example allows for the provision of multiple discontinuous hard edges per point. In this example, there are six hard edges, as the surface of the cube which defines the clipping surface has six faces. This can improve the rendering performance of the method, as it allows for the provision of multiple hard edges with only a single point, instead of requiring a cluster of many points.

Figure 4 shows a schematic of a point, which may form part of a point cloud for rendering an image. Axes 101 are shown to indicate the three dimensions with respect to which the point is defined. The point shown has a visible extent defined by a polyhedral function. In this example, the extent function defines a clipping surface in and of itself, as it goes to zero in some region of 3D space. In this example, the function has a cuboid shape, being equal to a first value inside the cuboid surface, and equal to zero outside it. The cuboid itself, defined by the extent function, is the clipping surface. This is distinct from the example depicted in Figure 3, where the extent function is non-zero over all of the 3D space, and the clipping surface is defined separately.

In other examples, a non-elliptical function, such as a polyhedral function, may be used as the extent function in combination with a clipping surface defined separately (as per Figure 3).

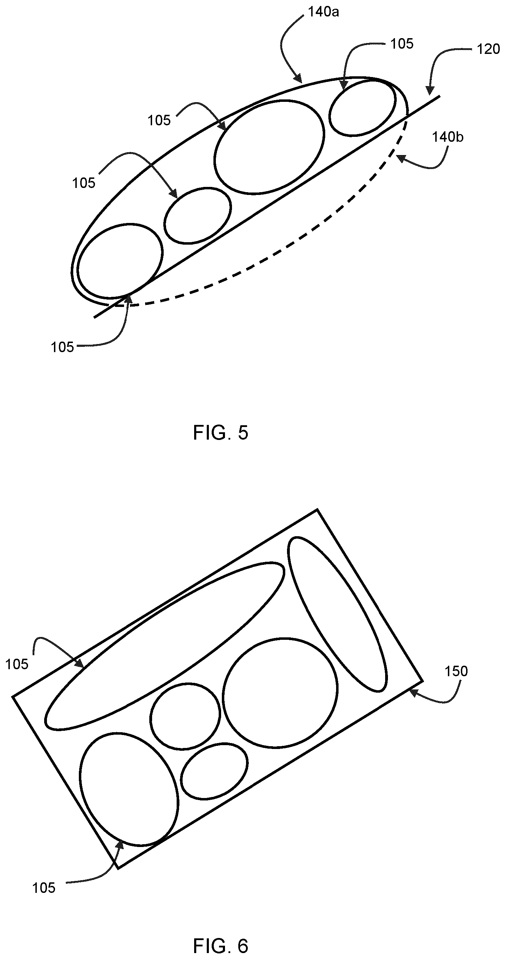

Figure 5 shows a schematic of number of points 105 without clipping surfaces being combined into a single, combined point 140a, 140b which comprises a clipping surface.

The points 105 comprise extents defined by Gaussian extent functions, do not comprise clipping surfaces, and are accordingly unable to intrinsically represent a hard edge. Instead, a multitude of small points have been placed close together, either by an algorithm or by a human artist, in order to replicate the visual effect of a hard edge. However, doing so is inefficient and requires greater computational resources, whilst still being an approximation which may fail upon close inspection by the viewer.

In this example, the points 105 shown have been selected for replacement by a single combined point 140a, 140b, as it has been determined that they are arranged so as to form an edge. In some examples, this determination may be performed by detection that the centres of the points all lie sufficiently close to a line. In other examples, the determination may be performed by detecting clustering of points close together, or by detecting sufficient overlap of the extent functions, or by detecting similar colours of the points for points sufficiently close, or by the use of a neural network or machine learning model trained to detect edge-like structures in point clouds.

The combined point 140a, 140b has an extent that is sized to approximate the sum of the extents of the original points 105. Additionally, the extent function of the combined point is chosen in order to match the shape of the sum of the extents of the original point most closely. In this example, due to the shape of the edge and the points comprising it, the combined point is chosen to have a Gaussian extent function. In other examples, the points may be arranged such that a different selection of extent function better represents the visual effect of the original points, such as an extent function comprising a discontinuity or a hard edge.

Further, the combined extent comprises a clipping surface 120. In this example, the clipping surface is defined by a plane, but in other examples it could be defined by any surface in 3D space. The clipping surface segments the extent of the point into a rendered portion 140a and a non-rendered portion 140b. The extent therefore comprises a hard edge, which is a discontinuous separation of the rendered and non-rendered portions. Visually, this will generate an edge in the rendered image. In this example, the visual effect of four points 105 without clipping surfaces has been supplanted using only a single point 140a, representing a significant saving in computation.

Figure 6 shows a schematic of number of points 105 without clipping surfaces being combined into a single, combined point 150. In this example, the extent function of the combined point is chosen to have a polyhedral shape, instead of a Gaussian elliptical shape. In this example, the extent function is therefore chosen to have the symmetry of a cuboid, in order to give the extent a cuboid shape. Other polyhedral extent functions include functions with prismatic shapes and symmetries, functions with spherical shapes and symmetries, etc.

This choice of extent function allows the combined point to better replace the original points 105, due to the arrangement and shape of the extents of the original points. In other examples, an elliptical function or another function may be chosen to define the extent of the combined point.

In this example, the extent function defining the extent of the combined point has a particular shape. It does not comprise a discontinuous hard edge, but it is selected to go to zero at particular distances from the centre of the point.

Accordingly, the clipping surface is selected to be defined by a surface of a three-dimensional region where the extent function is non-zero.

The original points 105 selected for replacement have, in this example, been selected based on their clustering. The original points are located close to each other and are of similar size and colour. In this way, multiple points may have been used to approximate a hard edge or series of hard edges. In other examples, the points may be selected for replacement based solely on their location or size, or based on more complex selection criteria, as a function of size, location and colour.

In this example, then, a plurality of points comprising elliptical extents have been replaced with a combined point with a non-elliptical, in this case polyhedral, extent. The combined point may of course have an extent defined by a function with any shape or symmetry, which may be continuous or have discontinuities. In doing so, the six original points 105 in the figure are replaced by a single point 150, reducing computational complexity and improving the performance of the method.

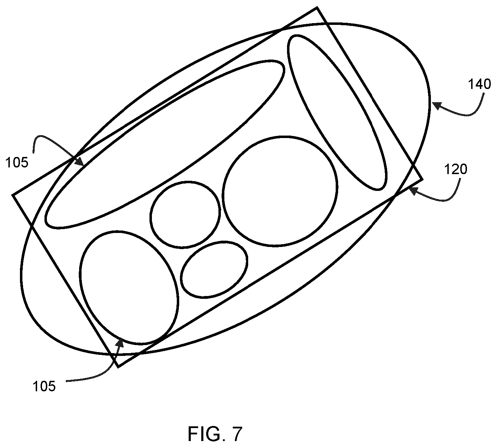

Figure 7 shows a schematic of number of points 105 without clipping surfaces being combined into a single, combined point 140 with a clipping surface 120. In this example, the combined point comprises an extent defined by an extent function with an elliptical shape, in this case a 3D Gaussian. The extent of the combined point is sized and positioned such that it provides a good approximation of the visual effect of the original points 105 when rendered.

Further, due to the clustering of the original points 105, it is determined that they have been used to approximate a hard edge or series of hard edges, as discussed for Figure 5 above. Accordingly, a clipping surface is determined for the combined point which provides hard edges where appropriate. In this case the clipping surface has a polyhedral shape, more specifically, a cuboid shape, providing six hard clipping edges. In other examples, different shaped clipping surfaces may be chosen, as discussed above.

In this example, then, a plurality of points comprising elliptical extents have been replaced with a combined point with an elliptical extent, with a clipping surface which acts to provide hard edges. In doing so, the six original points 140 in the figure are replaced by a single point 150, reducing computational complexity and improving the performance of the method.

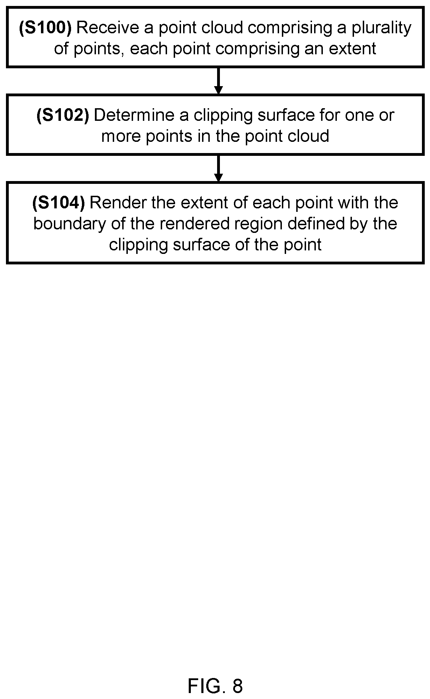

In Figure 8, the steps of one example method for rendering an image with a point cloud are detailed as a flow diagram. The steps of this method may be performed in line with any of the previous discussion. In step S100, a point cloud comprising a plurality of points is received, wherein each point comprises an extent. In step S102, a clipping surface is determined for one or more points in the point cloud. In step S104, an image is rendered by rendering the extent of each point, with the boundary of the region rendered defined by the clipping surface of the respective point.

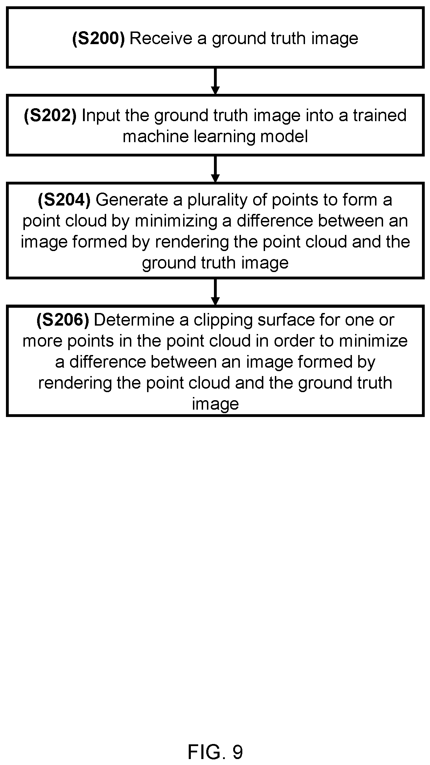

In Figure 9, the steps of an example method for generating a point cloud are detailed as a flow diagram. The steps of this method may be performed in line with any of the previous discussion. In step S200, a ground truth image is received. In step S202, the ground truth image is input into a trained machine learning model. The machine learning model is trained to perform step S204, wherein it generates a plurality of points to form a point cloud by minimizing a difference between an image formed by rendering the point cloud and the ground truth image. The machine learning model is further trained to perform step S206, to determine a clipping surface for one or more points in the point cloud in order to minimize a difference between an image formed by rendering the point cloud and the ground truth image.

In a further example, the machine learning model may receive an original point cloud, which is used to render the ground truth image. This allows for the optimisation of a point cloud which already renders a scene acceptably, by combining points together and providing clipping planes to improve the efficiency of the rendering. In some examples, therefore, the minimisation will further comprise minimising the number of points in the resultant point cloud.

In some examples, the machine learning algorithm is trained using, or is trained to minimise, a loss function, wherein the loss function is a function of the difference between the ground truth image and the rendered image, and also a function of the number of points in the resultant point cloud. In this way, the machine learning model finds the optimum configuration of the point cloud, comprising the fewest points which still produces an acceptable output image.

In a further example, the machine learning model only considers providing clipping planes to a subset of the points. In some examples, this subset may be selected randomly or as a simple succession of points (e.g. first group of points, second group of points, etc) but in this example the subset is the subset of points which form an edge in the ground truth image. The subset of points which form an edge may be detected in a number of ways, but in this example are detected by identifying an edge in the ground truth image using an edge detection algorithm, determining a 2D bounding box around the detected edge, then projecting the 2D bounding box into a 3D bounding box. The points contained within the 3D bounding box are the points considered by the machine learning model. Then, as the machine learning model attempts to optimise the point cloud by minimising a difference between an image formed by rendering the point cloud and the ground truth image, (or, in other examples, minimising some loss function, such as one described above), the machine learning model modifies, adjusts, deletes or combines only points in the 3D bounding box. This increases the efficiency of the calculation and decreases the computational complexity. Further, it decreases the dimensionality of the problem. Further still, it decreases the chance that the machine learning model finds a local minimum and therefore increases the performance of the optimisation.

In a further example, before the machine learning model performs step S206, determining clipping planes for one or more points in the point cloud, the extent of one or more points in the point cloud is expanded. In some examples, this comprises modifying the extent functions of the points to have an increased value in some regions of space, and/or multiplying the extent function by a constant value, and/or replacing the extent function with a different extent function. In this example, this process makes the points larger, with each one having a greater contribution to the resultant image. Expanding the extent of the points increases the chance that a given pair of points overlaps significantly. Further, it makes points that are aligned along an edge overlap the edge more significantly. Both of these changes may increase the chance of the machine learning algorithm modifying these points, which may be by combination, removal or provision of a clipping plane, which may increase the efficiency of the machine learning model. In other examples, this expansion is applied to non-machine learning optimisation equally.

## Claims

1. A computer-implemented method of rendering an image using a point cloud, the method comprising:

   receiving a point cloud comprising a plurality of points, each point comprising an extent defined by a three-dimensional extent function, centred on a centre point;
   determining a clipping surface for a point within the point cloud, wherein the clipping surface defines a boundary for rendering of the extent; and
   rendering the image by rendering the extent of each point within the boundary defined by its respective clipping surface.

2. The method of claim 1, wherein rendering of the image provides a hard edge, defined at least partly by the clipping surface, in the rendered image.

3. The method of any preceding claim, wherein one or more points within the point cloud comprise data defining a respective clipping surface, the clipping surface defining a portion of the extent that will not be rendered, thereby resulting in a hard edge in the rendered image.

4. The method of claim 3, wherein the extent of each point is defined by a three-dimensional Gaussian.

5. The method of any preceding claim, wherein:

   one or more points within the point cloud comprise a three dimensional extent function that defines a clipping surface, such that rendering of the entirety of the extent provides a hard edge in the rendered image; and/or
   one or more points comprise a three dimensional extent comprising a polyhedron, wherein a surface of the polyhedron defines the respective clipping surface of the point; and/or
   wherein one or more points comprise an interpolation factor, the interpolation factor defining a degree of interpolation between a Gaussian extent and a polyhedral extent.

6. The method of any preceding claim, wherein one or more points of the point cloud comprise an extent defined by a three-dimensional Gaussian function, the one or more points further comprising an interpolation factor, the interpolation factor defining a degree of an interpolation between the Gaussian extent and a polyhedral volume, wherein the method further comprises:

determining an interpolated volume, determined by interpolation between the extent of the point and the polyhedral volume, as parametrised by the interpolation factor;

wherein the clipping surface is defined by a surface of the interpolated volume.

7. The method of any preceding claim, further comprising:

combining a plurality of first points within the point cloud into a combined point, to provide a combined extent; and

determining a clipping surface for the combined point; and, optionally, the first points are determined by determining a plurality of points arranged so as to form an edge, or the first points are determined based on clustering of the first points.

8. The method of any preceding claim, wherein determining the clipping surface comprises:

receiving a ground truth image; and

optimising the clipping surface with respect to the ground truth image by minimising a difference between the rendered image and the ground truth image.

9. The method of claim 8, further comprising receiving an original point cloud, wherein the ground truth image comprises an image formed by rendering the original point cloud.

10. The method of any one of claims 8 to 9, wherein the optimisation comprises at least one of:

adjusting the clipping surface of a point to minimise a difference between the rendered image and the ground truth image; or

adjusting the extent of a point by modifying the shape of the extent function of the point to minimise a difference between the image and the ground truth image; or

modifying the extent function to include a discontinuous hard edge, and the clipping surface is defined by the location of the hard edge; or replacing one or more first points with a combined point, wherein the extent function of the combined point comprises a discontinuous hard edge, and the clipping surface of the combined point is defined by the location of the hard edge, to minimise a difference between the image and the ground truth image; or

the optimisation further comprises minimising the number of points in the point cloud, such that the machine learning model is trained to minimise the number of points in the point cloud whilst still minimising the difference between the ground truth image and an image formed by rendering the point cloud.

11. The method of any one of claims 8 to 10, wherein:

the point cloud comprises a plurality of first points comprising elliptical or Gaussian extents; and

the optimisation comprises replacing one or more of the first points with a second point, the second point comprising a polyhedral extent, to minimise a difference between the image and the ground truth image.

12. The method of any one of claims 8 to 11, further comprising:

identifying an edge in the ground truth image; and

determining a three-dimensional bounding box enclosing the edge;

wherein the optimisation comprises adjusting and/or replacing only the points contained within the bounding box.

13. The method of any one of claims 8 to 12, further comprising:
inputting the ground truth image and the point cloud into a trained machine learning model, wherein the machine learning model is trained to minimise a difference between the image and the ground truth image.

14. A computer-implemented method of generating a point cloud for rendering an image, the method comprising:

receiving a ground truth image;
inputting the ground truth image into a trained machine learning model, wherein the trained machine learning model is trained to:

generate a plurality of points to form the point cloud, each point comprising an extent defined by a three-dimensional extent function, centred on a centre point, by minimising a difference between an image formed by rendering the point cloud and the ground truth image; and
determine a clipping surface for a point within the point cloud, wherein the clipping surface defines a boundary for rendering of the extent, in order to minimise a difference between an image formed by rendering the point cloud and the ground truth image.

15. A computer-readable medium comprising instructions that, when executed by one or more processors, cause the one or more processors to perform the method of any preceding claim.

FIG. 1

FIG. 2

FIG. 3

FIG. 4

140a

105

120

105

105

140b

105

105

FIG. 5

105

150

105

FIG. 6

FIG. 7

**(S100)** Receive a point cloud comprising a plurality of points, each point comprising an extent

**(S102)** Determine a clipping surface for one or more points in the point cloud

**(S104)** Render the extent of each point with the boundary of the rendered region defined by the clipping surface of the point

FIG. 8

**(S200)** Receive a ground truth image

**(S202)** Input the ground truth image into a trained machine learning model

**(S204)** Generate a plurality of points to form a point cloud by minimizing a difference between an image formed by rendering the point cloud and the ground truth image

**(S206)** Determine a clipping surface for one or more points in the point cloud in order to minimize a difference between an image formed by rendering the point cloud and the ground truth image

FIG. 9

Europäisches
Patentamt

European
Patent Office

Office européen
des brevets

**EUROPEAN SEARCH REPORT**

**Application Number**

EP 25 17 6917

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MATTHIAS ZWICKER ET AL: "Perspective accurate splatting", GRAPHICS INTERFACE 2005 : PROCEEDINGS ; VICTORIA, BRITISH COLUMBIA, 9 - 11 MAY 2005, CANADIAN INFORMATION PROCESSING SOCIETY, 403 KING STREET WEST, SUITE 205 TORONTO, ONT. M5U 1LS CANADA, 17 May 2004 (2004-05-17), pages 247-254, XP058234362, ISSN: 0713-5424 ISBN: 978-1-56881-337-0 | 1-3,5,15 | INV. G06T17/00 G06T15/30 |
| Y | * abstract * * section 5; figure 4 * ----- | 4,7 | |
| Y | TIANCHEN DENG ET AL: "Compact 3D Gaussian Splatting For Dense Visual SLAM", ARXIV.ORG, CORNELL UNIVERSITY LIBRARY, 201 OLIN LIBRARY CORNELL UNIVERSITY ITHACA, NY 14853, 17 March 2024 (2024-03-17), pages 1-17, XP091702488, Retrieved from the Internet: URL:https://arxiv.org/pdf/2403.11247v1> * abstract * * section 3 * ----- -/-- | 4,7 | TECHNICAL FIELDS SEARCHED (IPC) G06T |

The present search report has been drawn up for all claims

| Place of search | Date of completion of the search | Examiner |
|---|---|---|
| Berlin | 26 August 2025 | Bouchaâla, Nicolas |

EPO FORM 1503 03.82 (P04C01)

Europäisches
Patentamt

European
Patent Office

Office européen
des brevets

## EUROPEAN SEARCH REPORT

**Application Number**

EP 25 17 6917

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | RAINA PRASHANT ET AL: "Sharpness fields in point clouds using deep learning", COMPUTERS AND GRAPHICS., vol. 78, February 2019 (2019-02), pages 37-53, XP093307562, GB ISSN: 0097-8493, DOI: 10.1016/j.cag.2018.11.003 Retrieved from the Internet: URL:https://pdf.sciencedirectassets.com/27 1576/1-s2.0-S0097849318X00089/1-s2.0-S0097 84931830181X/main.pdf?hash=8e776834cb9ba78 c8e0666cd3ad2134977cd4ddbec9c62574f9e42c91 ba20ee0&host=68042c943591013ac2b2430a89b27 0f6af2c76d8dfd086a07176afe7c76c2c61&pii=S0 09784931830181X&tid=spdf-aca4ff8b-99c1-4b7 5-af52-ef3> * abstract * * section 4 * ----- | 1-15 | |

| TECHNICAL FIELDS SEARCHED (IPC) |
|---|
| |

The present search report has been drawn up for all claims

| Place of search | Date of completion of the search | Examiner |
|---|---|---|
| Berlin | 26 August 2025 | Bouchaâla, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)